# EUROPEAN PATENT APPLICATION

(11) **EP 2 656 894 A1**
(43) Date of publication of application: **30.10.2013**
(21) Application number: 11851057.7
(22) Date of filing: 19.12.2011
(51) Int. Cl.: B01D 39/16, B32B 5/22, B32B 27/30, C08J 9/04, C09K 3/18

(54) **OIL-REPELLENT WATERPROOF AIR-PERMEABLE FILTER AND METHOD FOR PRODUCING SAME**

(30) Priority: 22.12.2010 JP 2010286566
(71) Applicant: Asahi Glass Company, Limited, Tokyo 100-8405 (JP); W.L. Gore & Associates, Co., Ltd., Tokyo 108-0075 (JP)
(72) Inventor: NAKAMURA, Masahiko, Tokyo 100-8405 (JP); OTOZAWA, Nobuyuki, Tokyo 100-8405 (JP); ASAKAWA, Akihiko, Tokyo 100-8405 (JP); MANABE, Hiroshi, Tokyo 108-0075 (JP)
(74) Representative: Müller-Boré & Partner Patentanwälte
(86) International application number: PCT/JP2011/079415
(87) International publication number: WO 2012/086606

(57) **Abstract**

To provide an oil repellent waterproof air-permeable filter of which environmental burden is small and which has an excellent liquid repellency to ketone solvents and ester solvents, and its production process. An oil repellent waterproof air-permeable filter comprising a substrate having a continuous porous structure and a coating material covering the substrate and containing a fluoropolymer having a perfluoroalkyl group, wherein the fluoropolymer has constituent units based on an acrylate having a chlorine atom at an α position and a C₁₋₆ perfluoroalkyl group, and the proportion of said constituent units is from 40 to 100 mass% in the total constituent units. A process for producing an oil repellent waterproof air-permeable filter, treating the substrate with an oil repellent waterproof composition containing a medium and the coating material and removing the medium.

## Description

### TECHNICAL FIELD

The present invention relates to an oil repellent waterproof air-permeable filter and its production process.

### BACKGROUND ART

In precision instruments such as an exhaust gas sensor for an automobile and an ink cartridge for an inkjet printer, in a case where air-permeable holes are necessary, it is required to prevent invasion of water and dusts for protecting and maintaining the performance of the precision instruments. Further, for batteries and fuel tanks, it is necessary to ventilate inflammable gas generated in their inside and prevent water immersion. In such a case, a hydrophobic porous film such as a porous polytetrafluoroethylene (hereinafter referred to as "PTFE") resin sheet or a porous polyolefin resin sheet, or a non woven fabric, a mesh, etc. waterproof coated with a PTFE resin may be used as a waterproof air-permeable film (air-permeable filter).

On the other hand, it is considered that to a waterproof air-permeable filter for electric equipments mounted on automobiles, evaporated oil components of respective automobile oils such as an engine oil for an engine room, a torque converter oil and a power steering oil are likely to deposit, an anticorrosive agent, etc. containing an organic solvent used at the under part of a chassis are likely to deposit, or a detergent for washing automobiles is likely to attach. If even a small amount of an oil component or a surfactant attaches to the air-permeable filter, the water resistance and the air-permeable property of the filter will be almost lost, and the basically required waterproof property and air-permeable property cannot be obtained. Thus, in applications in which an oil component or a surfactant tends to deposit, an air-permeable filter having an oil repellent waterproof property is used.

As an oil repellent waterproof air-permeable filter, one covering a substrate made of PTFE with a fluoropolymer having a perfluoroalkyl group (hereinafter referred to as "R^{F} group") is known. As the fluoropolymer, a fluoropolymer prepared by polymerizing an alkyl acrylate or an alkyl methacrylate which has a hydrogen atom or a methyl group at an α position and an R^{F} group is known (Patent Document 1). It is known to use a polymer having an R^{F} group having at least 8 carbon atoms as the fluoropolymer.

However, the fluoropolymer having an R^{F} group having at least 8 carbon atoms may be decomposed in environments or in vivo, and decomposition products may be accumulated. That is, its high environmental burden is concerned. Accordingly, it is desired to use a fluoropolymer having an R^{F} group having at most 6 carbon atoms and no R^{F} group having at least 8 carbon atoms.

### PRIOR ART DOCUMENTS

### PATENT DOCUMENTS

Patent Document 1: JP-A-8-206422

### DISCLOSURE OF INVENTION

### TECHNICAL PROBLEM

Whereas, the present inventors have studied an oil repellent waterproof air-permeable filter employing a fluoropolymer having an R^{F} group having at most 6 carbon atoms and no R^{F} group having at least 8 carbon atoms. As a result, they have found that the liquid repellency of said oil repellent waterproof air-permeable filter to ketone solvents and ester solvents is insufficient.

The present invention provides an oil repellent waterproof air-permeable filter of which environmental burden is small and which has an excellent liquid repellency to ketone solvents and ester solvents, and its production process.

### SOLUTION TO PROBLEM

The oil repellent waterproof air-permeable filter of the present invention comprises a substrate having a continuous porous structure and a coating material covering the substrate and containing a fluoropolymer having a perfluoroalkyl group, wherein the fluoropolymer has constituent units based on the following monomer (a), and the proportion of said constituent units is from 40 to 100 mass% in the total constituent units:
monomer (a): an acrylate having a chlorine atom at an α position and a C₁₋₆R^{F} group.

In the oil repellent waterproof air-permeable filter of the present invention, the monomer (a) is preferably an acrylate having a chlorine atom at an α position and a C₆ R^{F} group.

Further, the substrate is preferably made of PTFE.

The process for producing an oil repellent waterproof air-permeable filter, of the present invention comprises treating a substrate having a continuous porous structure with an oil repellent waterproof composition comprising a medium and a coating material containing a fluoropolymer having a R^{F} group, and removing the medium, wherein the fluoropolymer has constituent units based on the following monomer (a), and the proportion of the constituent units is from 40 to 100 mass% in the total constituent units:
monomer (a): an acrylate having a chlorine atom at an α position and a C₁₋₆ R^{F} group.

In the process for producing an oil repellent waterproof air-permeable filter, of the present invention, the substrate is preferably made of PTFE.

Further, the medium is preferably at least one member selected from the group consisting of a hydrofluorocarbon and a hydrofluoroether.

### ADVANTAGEOUS EFFECTS OF INVENTION

The oil repellent waterproof air-permeable filter of the present invention has a small environmental burden and an excellent liquid repellency to ketone solvents and ester solvents.

Further, by the process of producing an oil repellent waterproof air-permeable filter of the present invention, an oil repellent waterproof air-permeable filter having a small environmental burden and excellent liquid repellency to ketone solvents and ester solvents can be obtained.

### DESCRIPTION OF EMBODIMENTS

In the present specification, the compound represented by the formula (1) is represented by the compound (1). Compounds represented by other formulae are similarly represented. Further, (meth)acrylate means an acrylate or a methacrylate, and other compounds are also similarly represented. Further, in the present specification, a monomer means a compound having a polymerizable unsaturated group. Further, in the present specification, R^{F} group is a group wherein all hydrogen atoms in an alkyl group are substituted by fluorine atoms.

### <Oil repellent waterproof air-permeable filter>

The oil repellent waterproof air-permeable filter of the present invention is a filter comprising a substrate having a continuous porous structure and a coating material covering the substrate and containing a fluoropolymer having an R^{F} group, wherein the fluoropolymer has constituent units based on the after-mentioned monomer (a), and the proportion of said constituent unit is from 40 to 100 mass% in the total constituent units (hereinafter referred to as "fluoropolymer (A)").

### [Substrate]

The substrate having a continuous porous structure of the present invention is a substrate made of a gas-permeable material and may be one through which gas particularly air permeates. As the gas permeable material, natural materials or synthetic materials may be used, and fabrics, knits, non woven fabrics, net, felt, a porous polymer sheet, cellulose paper, glass fiber paper or composites thereof may be mentioned.

As the shape of the substrate, a sheet shape, a tubular shape or a plug shape is preferred.

As the continuous porous structure of the substrate, one having continuous holes which penetrate both surfaces of the substrate is preferred. For example, a net shape, a mesh shape or a porous or the like may be mentioned.

The material of the porous polymer sheet may, for example, be a polyethylene, a polypropylene, a polystyrene, a polyimide or a fluororesin. From the viewpoint of the excellent waterproof property, the fluororesin is preferred, and PTFE is more preferred. The substrate is preferably a porous PTFE sheet, particularly preferably an expanded porous PTFE sheet, since the drip proof property is excellent, and while preventing invasion of water droplets, oil droplets and dust, air permeability can be obtained at the inside and the outside of electric equipments.

The expanded porous PTFE sheet can be obtained by preparing a formed product of a paste by mixing a PTFE fine powder and a binder, removing the binder from the formed product, stretching the formed product at a high temperature at a high rate and as the case requires, baking it. The expanded porous PTFE sheet may be a monoaxially expanded porous PTFE sheet or a biaxially expanded porous PTFE sheet.

The fine structure of the expanded porous PTFE sheet comprises small fibers so-called fibril and particulate nodes so-called node which connect the fibrils, and there are fine pores in a continuous state one another among fibrils and nodes, and so-called continuous porous structure is formed. Specifically, in the case of the monoaxial stretching, nodes (folded crystals) have an elongated shape perpendicular to the stretching direction, and fibrils (a bundle of straight chain molecules of folded crystals which is dissolved and stretched by stretching) are aligned toward the stretching direction in a network state so as to connect the nodes. Further, the nodes have a fibrous structure wherein spaces among the fibrils or among the fibrils and the nodes are pores. Further, in the case of the biaxial stretching, the fibrils radially spread, nodes which connect the fibrils are present in an island state, and a web shape fibrous structure in which many spaces formed by the fibrils and the nodes are present, is formed.

The substrate preferably has a strength so that an expanded porous PTFE sheet can be solely (single layer) used, however, an expanded porous PTFE sheet may be laminated with an air-permeable reinforcing layer having an elasticity such as non woven fabric or a net such as fabric or knit for use.

The substrate preferably has a Gurley number (measured in accordance with JIS P8117) of at most 1,000 seconds, more preferably at most 600 seconds. In a case where the substrate is an expanded porous PTFE sheet, the substrate is preferably a sheet having a pore size of from 0.01 to 15 µm.

So long as not impaired, an additive such as an ultraviolet light stabilizer, a colorant, a plasticizer, an antistatic agent or an anti-fungus agent may be added to the substrate.

The oil repellent waterproof air-permeable filter of the present invention has a coating material so as to cover the substrate, the thickness of a coating film of the coating material to the pore size of the substrate is small, and there are spaces even in a state covered with the coating material. Thus, a continuous porous structure is maintained.

### [Coating material]

### (Fluoropolymer (A))

The fluoropolymer (A) essentially has constituent units based on the monomer (a) (hereinafter referred to as unit (α)) and as the case requires, has constituent units based on the monomer (b) (hereinafter referred to as unit (β)) and constituent units based on the monomer (c) (hereinafter referred to as unit (γ)).

The monomer (a) is an acrylate having a chlorine atom at an α position and a C₁₋₆ R^{F} group. The monomer (a) is preferably the following compound (1).

(Z-Y)-OC(O)CCl=CH₂ (1)

Z is a C₁₋₆ R^{F} group (provided that the R^{F} group may have an etheric oxygen atom). As Z, the following groups may, for example, be mentioned.
F(CF₂)4 -,
F(CF₂)₅ -,
F(CF₂)₆ -,
(CF₃)₂ CF(CF₂)₂ -, etc.

Y is a bivalent organic group (except a perfluoroalkylene group) or a single bond.

The bivalent organic group is preferably an alkylene group. The alkylene group may be a straight chain or be branched. Further, the bivalent organic group may have -O-, NH-, -CO-, -S-, SO₂-, -CD¹=CD²- (each of D¹ and D² which are independent of each other is a hydrogen atom or a methyl group), etc. together with the alkylene group.

As Y, the following groups may be mentioned.
-CH₂ -,
-CH₂ CH₂-,
-(CH₂)₃-,
-CH₂ CH₂ CH(CH₃)-,
-CH=CH-CH₂ -,
-S-CH₂ CH₂ -,
-CH₂ CH₂ -S-CH₂ CH₂ -,
-CH₂ CH₂-SO₂-CH₂ CH₂-,
-W-OC(O)NH-A-NHC(O)O-(CₚH₂ₚ)-, etc.

Here, p is an integer of from 2 to 30.

A is a not branched, symmetrical alkylene group, allylene group or aralkylene group, and preferably -C₆H₁₂-, - φ -CH₂- φ -, or - φ - (φ is a phenylene group).

W is one of the following groups.
-SO₂N(R¹)-C_{d}H_{2d}-,
-CONHC_{d}H_{2d}-,
-CH(R^{F1})-CₑH₂ₑ-,
-C_{q}H_{2q}-.

Here, R¹ is a hydrogen atom or a C₁₋₄ alkyl group, d is an integer of from 2 to 8, R^{F1} is a C₁₋₂₀ R^{F} group, e is an integer of from 0 to 6, and q is an integer of from 1 to 20. R^{F1} is preferably a C₁₋₆ R^{F} group, more preferably a C₄ R^{F} group or a C₆ R^{F} group.

From the viewpoint of the polymerizability with another monomer, the flexibility of a coating film containing the fluoropolymer (A), the adhesive property of the fluoropolymer (A) to the substrate, the solubility in a medium, the easiness of the polymerization, etc., the compound (1) is preferably an α-chloroacrylate having a C₄₋₆ R^{F} group, more preferably an α-chloroacrylate having a C₆ R^{F} group.

Further, the compound (1) is more preferably a compound wherein Z is a C₄₋₆ R^{F} group, Y is a C₁₋₄ alkylene group, particularly preferably a compound wherein Z is a C₆ R^{F} group, and Y is a C₁₋₄ alkylene group. As examples of the particularly preferred compound (1), F(CF₂)₆-CH₂CH₂-OC(O)CCl=CH₂ wherein Z is F(CF₂)₆-, and Y is -CH₂CH₂- may be mentioned.

As the monomer (a), one type may be solely used, or two or more types may be used in combination.

The monomer (b) is an acrylate having a hydrogen atom or a methyl group at an α position and a C₁₋₆ R^{F} group. By using the monomer (b), the film forming property of the fluoropolymer (A) is improved, and the liquid repellency after applying a coating material containing the fluoropolymer (A) is improved.

As the monomer (b), those mentioned as the monomer (a) may be mentioned, except that the α position is a hydrogen atom or a methyl group. As the preferred monomer (b), those mentioned as the preferred monomer (a) may be mentioned, except that the α position is a hydrogen atom or a methyl group, and the following compound (2) is particularly preferred.

Z¹-Y¹-OC(O)CR=CH₂ (2)

Here, Z¹ is a C₄₋₆ R^{F} group, Y¹ is a C₁₋₄ alkylene group, and R is a hydrogen atom or a methyl group.

As the monomer (b), one type may be solely used, or two or more types may be used in combination.

The monomer (c) is a monomer other than the monomer (a) and the monomer (b) and a monomer copolymerizable with the monomer (a) and the monomer (b). By using the monomer (c), the adhesive property of a coating film containing the fluoropolymer (A) to the substrate is improved, and costs can be reduced.

As the monomer (c), a (meth)acrylate having no R^{F} group, a (meth)acrylamide, a (meth)acrylonitrile, a vinyl or an olefin may, for example, be mentioned. Specifically, the following compounds may be mentioned.

2-ethylhexyl (meth)acrylate, stearyl (meth)acrylate, cyclohexyl (meth)acrylate, (meth)acrylic acid, polyoxyalkylene (meth)acrylate, glycidyl (meth)acrylate, benzyl (meth)acrylate, isocyanate ethyl (meth)acrylate, aziridinyl (meth)acrylate, hydroxyalkyl (meth)acrylate, and (meth)acrylate having a polysiloxane moiety.

(Meth)acrylamide, diacetone (meth)acrylamide, methylolated (meth)acrylamide, vinyl acetate, vinyl chloride, vinyl fluoride, vinyl alkyl ether, halogenated alkyl vinyl ether, vinyl alkyl ketone, N-vinyl carbazole, ethylene, butadiene, isoprene, chloroprene, styrene, α-methylstyrene, p-methylstyrene, maleic anhydride, etc.

As the monomer (c), one type may be solely used, or two or more may be used in combination.

The proportion of the unit (α) in the fluoropolymer (A) is from 40 to 100 mass%, preferably from 55 to 100 mass%, more preferably from 70 to 100 mass%, particularly preferably 100 mass% in the total constituent units. If the proportion of the unit (α) is at least the above lower limitation, the excellent liquid repellency to ketone solvents and ester solvents can be obtained.

The proportion of the unit (β) in the fluoropolymer (A) is preferably from 0 to 60 mass%, more preferably from 0 to 30 mass% in the total constituent units. What the proportion of the unit (β) is 0 mass% means having no unit (β). When the proportion of the unit (β) is at most the above upper limitation, the liquid repellency to ketone solvents and ester solvents is excellent, and an excellent film forming property can be obtained. Further, from the viewpoint that the glass transition temperature becomes low, and the film forming property is excellent at a low temperature, the proportion of the unit (β) is preferably at least 10 mass%.

The proportion of the unit (γ) in the fluoropolymer (A) is preferably from 0 to 30 mass%, more preferably from 0 to 10 mass%, particularly preferably 0 mass% in the total constituent units. When the proportion of the unit (γ) is the at most the above upper limitation, the liquid repellency to ketone solvents and ester solvents is excellent.

The proportion of the constituting units based on the monomer in the present invention is obtained from the NMR analysis and the elemental analysis. Further, in a case where the proportion cannot be obtained from the NMR analysis and the elemental analysis, the proportion may be calculated based on a charged amount of monomers at the time of producing the fluoropolymer.

The number average molecular weight (Mn) of the fluoropolymer (A) is preferably from 1,000 to 200,000, more preferably from 10,000 to 50,000. When the number average molecular weight (Mn) of the fluoropolymer (A) is at least the above lower limitation, the liquid repellency to ketone solvents and ester solvents is improved. When the number average molecular weight (Mn) of the fluoropolymer (A) is at most the above upper limitation, the film-forming property is excellent, whereby the sufficient liquid repellency to ketone solvents and ester solvents can be obtained.

The number average molecular weight (Mn) of the fluoropolymer (A) is a converted molecular weight of methyl polymethacrylic acid measured by gel permeation chromatography (GPC).

The fluoropolymer (A) is produced by polymerizing the monomer (a) and as the case requires the monomer (b) and the monomer (c). The polymerization method may, for example, be solution polymerization in a fluorine type medium, emulsion polymerization in an aqueous medium or suspension polymerization in an aqueous medium, and the solution polymerization in a fluorine type medium is preferred.

The polymerization initiator may, for example, be a heat polymerization initiator, a photopolymerization initiator, a radiation polymerization initiator, a radical polymerization initiator or an ionic polymerization initiator, and an aqueous or an oil-soluble radical polymerization initiator is preferred.

As the radical polymerization initiator, a commonly used initiator such as an azo type polymerization initiator, a peroxide type polymerization initiator or a redox type initiator may be used depending on the polymerization temperature.

As the radical polymerization initiator, the azo compound is particularly preferred. The polymerization temperature is preferably from 30 to 80°C.

The amount of the polymerization initiator is preferably from 0.01 to 10 parts by mass, more preferably from 0.1 to 5 parts by mass, per 100 parts by mass of the total amount of monomers used for the polymerization.

From the viewpoint of the liquid repellency to ketone solvents and ester solvents, the proportion of the monomer (a) is from 40 to 100 mass%, preferably from 55 to 100 mass%, more preferably from 70 to 100 mass%, particularly preferably 100 mass% in the total monomers (100 mass%) to be used for the polymerization.

The proportion of the monomer (b) is preferably from 0 to 60 mass%, more preferably from 0 to 45 mass%, particularly preferably from 0 to 30 mass% in the total monomers (100 mass%) to be used for the polymerization.

The proportion of the monomer (c) is preferably from 0 to 30 mass%, more preferably from 0 to 10 mass%, particularly preferably 0 mass% in the total monomer (100 mass%) to be used for the polymerization.

The coating material covering the substrate of the liquid repellent waterproof air-permeable filter of the present invention may contain a fluoropolymer other than the fluoropolymer (A). As the fluoropolymer other than the fluoropolymer (A), a fluoropolymer having an R^{F} group other than the fluoropolymer (A) (hereinafter referred to as "fluoropolymer (B)") and a fluoropolymer having a fluorinated aliphatic ring structure as the main chain (hereinafter referred to as "fluoropolymer (C)") may be mentioned.

### (Fluoropolymer (B))

As the fluoropolymer (B), a fluoropolymer having the unit (α) wherein the proportion of the unit (α) is less than 40 mass% in the total constituent units or a fluoropolymer having no unit (α) and having essentially the unit (β) and as the case requires the unit (γ), is preferred.

The number average molecular weight (Mn) of the fluoropolymer (B) is preferably from 1,000 to 200,000, more preferably from 5,000 to 50,000. When the number average molecular weight (Mn) of the fluoropolymer (B) is at least the above lower limitation, the liquid repellency to ketone solvents and ester solvents is improved. When the number average molecular weight (Mn) of the fluoropolymer (B) is at most the above upper limitation, the film-forming properties excellent, and consequently, the sufficient liquid repellency to ketone solvents and ester solvents can be obtained.

The number average molecular weight (Mn) of the fluoropolymer (B) is a converted molecular weight of a methyl polymethacrylic acid measured by gel permeation chromatography (GPC).

The fluoropolymer (B) can be produced in the same manner as in the fluoropolymer (A), except the amount of the monomer (a), the monomer (b) and the monomer (c).

### (Fluoropolymer (C))

As the fluoropolymer (C), a fluoropolymer obtained by polymerizing a monomer having a fluorinated ring structure or a fluoropolymer having a ring structures in the main chain, which is obtained by cyclopolymerizing a fluoromonomer having at least two polymerizable double bonds, is preferred. As such a fluoropolymer, the polymer mentioned in JP2854223 may, for example, be mentioned.

The proportion of the fluoropolymer (B) is preferably from 0 to 20 parts by mass, more preferably from 0 to 10 parts by mass, per 100 parts by mass of the fluoropolymer (A).

The proportion of the fluoropolymer (C) is preferably from 0 to 20 parts by mass, more preferably from 0 to 10 parts by mass, per 100 parts by mass of the fluoropolymer (A).

### <Process for producing the oil repellent waterproof air-permeable filter>

The oil repellent waterproof air-permeable filter of the present invention is produced by treating a substrate having a continuous porous structure with an oil repellent waterproof composition containing a medium and a coating material essentially containing the fluoropolymer (A), and removing the medium.

As the medium for the oil repellent waterproof composition, a fluorine type medium is preferred, and a hydrofluorocarbon (hereinafter referred to as "HFC") and a hydrofluoroether (hereinafter referred to as "HFE") are preferred. HFC is a compound composed of carbon atoms, hydrogen atoms and fluorine atoms, wherein a part of hydrogen atoms in a hydrocarbon is substituted by fluorine atoms. As HFC, HFC having at least 4 carbon atoms and which is liquid at normal temperature under normal pressure is preferred. HFE is a compound having an etheric oxygen atom between carbon-carbon atoms. As HFE, HFE having at least 4 carbon atoms and which is liquid at normal temperature under normal pressure is preferred. In the present specification, the normal temperature under normal pressure means 25°C at 1 atm.

The molecular structure of HFC and HFE may be linear or branched, and the linear is preferred. The number of etheric oxygen atoms contained in one molecule of HFE may be one or at least two. From the viewpoint of the boiling point preferred as a medium and stability, one or two is preferred, and one is more preferred.

As specific examples of HFC, the following compounds may be mentioned.
1,1,1,3,3-pentafluorobutane (CF₃CH₂CF₂CH₃),
1,1,1,2,2,3,4,5,5,5-decafluoropentane (CF₃CF₂CHFCHFCF₃),
1 H-monodecafluoropentane (C₅F₁₁H),
3H-monodecafluoropentane (C₅F₁₁H),
1 H-tridecafluorohexane (C₆F₁₃H),
1 H-pentadecafluoroheptane (C₇F₁₅H),
3H-pentadecafluoroheptane (C₇F₁₅H),
1 H-heptadecafluorooctance (C₈F₁₇H),
1 H-nonadecafluorononane (C₉F₁₉H),
1 H-perfluorodecane (C₁₀F₂₁H),
1,1,1,2,2,3,3,4,4-nonafluorohexane (C₄F₉CH₂CH₃),
1,1,1,2,2,3,3,4,4,5,5,6,6-tridecafluorooctane (C₆F₁₃CH₂CH₃),
1,1,1,2,2,3,3,4,4,5,5,6,6,7,7,8,8-heptadecafluorooctane (C₈F₁₇CH₂CH₃), etc.

As HFC, 1,1,1,2,2,3,3,4,4,5,5,6,6-tridecafluorooctane and 1 H-tridecafluorohexane are preferred, and 1,1,1,2,2,3,3,4,4,5,5,6,6-tridecafluorooctane is more preferred.

As specific examples of HFE, the following compounds may be mentioned.

Methyl perfluorobutylether (C₄F₉OCH₃),
ethyl perfluorobutylether (C₄F₉OCH₂CH₃),
methyl perfluoropentylether (C₅F₁₁OCH₃),
ethyl perfluoropentylether (C₅F₁₁OCH₂CH₃),
methyl perfluorohexylether (C₆F₁₃OCH₃),
ethyl perfluorohexylether (C₆F₁₃OCH₂CH₃),
methyl perfluoroheptylether (C₇F₁₅OCH₃),
ethyl perfluoroheptylether (C₇F₁₅OCH₂CH₃),
methyl perfluorooctylether (C₈F₁₇OCH₃),
ethyl perfluorooctylether (C₈F₁₇OCH₂CH₃),
methyl perfluorononylether (C₉F₁₉OCH₃),
ethyl perfluorononylether (C₉F₁₉OCH₂CH₃),
methyl perfluorodecylether (C₁₀F₂₁OCH₃),
ethyl perfluorodecylether (C₁₀F₂₁OCH₂CH₃),
1,1,2,2-tetrafluoroethyl-2,2,2-trifluoroethylether (CF₃CH₂OCF₂CF₂H),
1,2,2,2-tetrafluoroethyl-2,2,2-trifluoroethylether (CF₃CHFOCH₂CF₃),
1,1,2,3,3,3-hexafluoropropyl-2,2,2-trifluoroethylether (CF₃CH₂OCF₂CFHCF₃),
1,1,2,2-tetrafluoroethyl-2,2,3,3-tetrafluoropropylether (CHF₂CF₂CH₂OCF₂CF₂H),
1,1,2,2,3,3-hexafluoro-1-(1,2,2,2,-tetrafluoroethoxy)propyl-perfluoropropylether (C₃F₇OC₃F₆OCFHCF₃),
1,1,1,2,3,4,4,5,5,5-decafluoro-2-(trifluoromethyl)-3-(methoxy)pentane (CF₃CF(CF₃)CF(OCH₃)CF₂CF₃),
1,1,1,2,3,4,4,5,5,5-decafluoro-2-(trifluoromethyl)-3-(ethoxy)pentane (CF₃CF(CF₃)CF(OC₂H₅)CF₂CF₃),
1,1,2,2-tetrafluoro-1-(2,2,2-trifluoroethoxy)ethane (CF₂(OCH₂CF₃)CF₂H),
1,1,2,3,3,3-hexafluoro-1-(2,2,2-trifluoroethoxy)propane(CF₂(OCH₂CF₃)CFHCF₃),
1,1,2,2-tetrafluoro-1-(2,2,3,3-tetrafluoropropoxy)ethane (CF₂(OCH₂CF₂CF₂H)CF₂H),
1,1,2,3,3,3-hexafluoro-1-(2,2,3,3-tetrafluoropropoxy)propane (CF₂(OCH₂CF₂CF₂H)CFHCF₃), etc.

As HFE, methyl perfluorohexylether, ethyl perfluorobutylether and methyl perfluorobutylether are preferred, and methyl perfluorohexylether is more preferred.

As the medium, one type may be solely used, or two or more types may be used in combination. As the medium, the medium used for the polymerization for the fluoropolymer (A), etc. may be used by diluting it as the case requires. The proportion of the medium is preferably from 100 to 50,000 parts by mass, more preferably from 500 to 10,000 parts by mass in the total amount (100 parts by mass) of the fluoropolymers (A) to (C). When the proportion of the medium is at least the above lower limitation, the treating efficiency is improved. When the proportion of the medium is at most the above upper limitation, the efficiency for removing the medium is improved.

As the method for treating the substrate with the oil repellent waterproof composition, dip coating or spray coating may, for example, be mentioned.

As the method for removing the medium, for example, a method of evaporating the medium by air drying or heat treatment may be mentioned. The temperature for removing the medium is preferably from 50 to 200°C, and from the viewpoint of improving the oil repellency, more preferably from 100 to 150°C.

In the above explained oil repellent waterproof air-permeable filter of the present invention, by covering a substrate having a continuous porous structure with a coating material containing the fluoropolymer (A), the excellent liquid repellency to ketone solvents and ester solvents can be obtained. Further, even though a monomer having a R^{F} group having at least 8 carbons is not used, the sufficient liquid repellency to ketone solvents and ester solvents can be obtained, whereby environmental burden can be reduced. Further, the oil repellent waterproof air-permeable filter of the present invention has sufficient oil repellency and water repellency.

### EXAMPLES

Now, the present invention will be described in further detail with reference to Examples. However, the present invention is by no means restricted thereto. Now, "parts" means "parts by mass", and "MEK" means "methyl ethyl ketone". Examples 8, 9, 13 to 15, 17 and 18 are Working Examples, Examples 10 to 12 and 16 are Comparative Examples, and Examples 19 and 20 are Reference Examples.

### [Number average molecular weight (Mn)]

The number average molecular weight (Mn) of a fluoropolymer was measured by gel permeation chromatography (GPC: Tosoh HLC-8220, column: Polymer laboratory PL gel MIXED-C (5 µm), solvent: mixed solvent of ASAHIKLIN AK-225 (manufactured by Asahi Glass Company, Limited, a mixture of 3,3-dichloro-1,1,1,2,2-pentafluoropropane and 1,3-dichloro-1,1,2,2,3-pentafluoropropane, fluorine weight percentage: 46.8 mass%)/hexafluoroisopropanol=99/1 (volume ratio), column temperature: 40°C, conversion into methyl polymethacrylic acid).

### [Fluorine weight percentage]

The fluorine weight percentage of a fluoropolymer is in accordance with the combustion and pyrohydrolysis method (the combustion condition is in accordance with M. Noshiro, T. Yarita, Japan analyst 1977, 26, 721-723).

### <Preparation example of fluoropolymer>

### [Example 1]

5 g of α-chloroperfluoroalkyl acrylate (CH₂=CClCOOCH₂CH₂C₆F₁₃) (hereinafter referred to as "α-CIC6FA") as a monomer (a), 45 g of ASAHIKLIN AK-225 (manufactured by Asahi Glass Company, Limited) and 0.05 g of azobis isobutyronitrile as a polymerization initiator were added in a pressure resistance glass ample (100 mL). The inside of the ample was flushed with nitrogen three times, and then polymerization was carried out at 65°C for 15 hours. As a result, a liquid containing 10 mass% of a fluoropolymer A1 having an R^{F} group was obtained. The liquid was added in a 1 L flask made of glass in which 500 g of heptane was added while stirring, and then a supernatant was removed by decantation to obtain a solid containing the fluoropolymer A1. The solid was dried to obtain 4.5 g of the fluoropolymer A1.

The number average molecular weight of the fluoropolymer A1 was 17,000. Further, the fluorine weight percentage of the fluoropolymer A1 was measured, and it was 54.5 mass% (theoretical value 54.6 mass%).

### [Example 2]

20 g of a perfluoroalkyl methacrylate (CH₂=CCH₃COOCH₂CH₂C₆F₁₃) (hereinafter referred to as "C6FMA") as a monomer (b), 46.7 g of ASAHIKLIN AK-225 and 0.11 g of 2,2'-azobis (2,4-dimethylvaleronitrile) as a polymerization initiator were added in a pressure resistance glass ample (100 mL). The inside of the ample was flushed with nitrogen three times, and then polymerization as carried out at 50°C for 48 hours. As a result, a liquid containing 10 mass% of a fluoropolymer B1 having an R^{F} group was obtained. The liquid was added in a 2 L flask made of glass in which 1,000 g of methanol was added while stirring. Then, a mixture containing precipitates was filtrated to obtain a solid containing the fluoropolymer B1. The solid was dried to obtain 19 g of the fluoropolymer B1.

The number average molecular weight of the fluoropolymer B1 was 33,000. Further, the fluorine weight percentage of the fluoropolymer B1 was measured, it was 57.7 mass% (theoretical value: 57.2 mass%).

### [Example 3]

8 g of α-CIC6FA as a monomer (a), 72 g of ASAHIKLIN AC-6000 (manufactured by Asahi Glass Company, Limited, C₆F₁₃C₂H₅, fluorine weight percentage: 71.0 mass%) and 0.24 g of 2,2'-azobis(2,4-dimethylvaleronitrile) as a polymerization initiator were added in a pressure resistance glass ample (100 mL). The inside of the ample was flushed with nitrogen three times, and then polymerization was carried out at 50°C for 48 hours. As a result, 80 g of a liquid containing 10 mass% of a fluoropolymer A2 having an R^{F} group was obtained. The number average molecular weight of the fluoropolymer A2 was 17,000.

### [Example 4]

7.2 g of α-CIC6FA as a monomer (a), 0.8 g of C6FMA as a monomer (b), 72 g of ASAHIKLIN AC-6000 and 0.24 g of 2,2'-azobis(2,4-dimethylvaleronitrile) as a polymerization initiator were added in a pressure resistance glass ample (100 mL). The inside of the ample was flushed with nitrogen three times, and then polymerization was carried out at 50°C for 48 hours. As a result, 80 g of a liquid containing 10 mass% of a fluoropolymer A3 having an R^{F} group was obtained. The number average molecular weight of the fluoropolymer A3 was 17,000.

### [Example 5]

4.8 g of α-CIC6FA as a monomer (a), 3.2 g of C6FMA as a monomer (b), 72 g of ASAHIKLIN AC-6000 and 0.24 g of 2,2'-azobis(2,4-dimethylvaleronitrile) as a polymerization initiator were added in a pressure resistance glass ample (100 mL). The inside of the ample was flushed with nitrogen three times, and then polymerization was carried out at 50°C for 48 hours. As a result, 80 g of a liquid containing 10 mass% of a fluoropolymer A4 having an R^{F} group was obtained. The number average molecular weight of the fluoropolymer A4 was 15,000.

### [Example 6]

2.4 g of α-CIC6FA as a monomer (a), 5.6 g of C6FMA as a monomer (b), 72 g of ASAHIKLIN AC-6000 and 0.24 g of 2,2'-azobis(2,4-dimethylvaleronitrile) as a polymerization initiator were added in a pressure resistance glass ample (100 mL). The inside of the ample was flushed with nitrogen three times, and then polymerization was carried out at 50°C for 48 hours. As a result, 80 g of a liquid containing 10 mass% of a fluoropolymer B2 having an R^{F} group was obtained. The number average molecular weight of the fluoropolymer B2 was 12,000.

### [Example 7]

CYTOP CTX-109AE (manufactured by Asahi Glass Company, Limited, (C₆F₁₀O)ₙ, fluorine weight percentage: 68.3 mass%) was added in a container made of PTFE and dried at 200°C for 1 hour to obtain a fluoropolymer C1 having a fluorinated aliphatic cyclic structure in the main chain.

The monomer compositions and the number average molecular weight of the fluoropolymers of Examples 1 to 6 are shown in Table 1.

**[Table 1]**

| | | Ex. 1 | Ex. 2 | Ex. 3 | Ex. 4 | Ex. 5 | Ex. 6 |
|---|---|---|---|---|---|---|---|
| Type of fluoropolymer | | A1 | B1 | A2 | A3 | A4 | B2 |
| Monomer (a) | α-CIC6FA [g] | 5 | - | 8 | 7.2 | 4.8 | 2.4 |
| Monomer (b) | C6FMA [g] | - | 20 | - | 0.8 | 3.2 | 5.6 |
| Solvent | AK-225 [g] | 45 | 46.7 | - | - | - | - |
| | AC-6000 [g] | - | - | 72 | 72 | 72 | 72 |
| Number average molecular weight (Mn) | | 17,000 | 33,000 | 17,000 | 17,000 | 15,000 | 12,000 |

### <Evaluation of wettability>

### [Example 8]

2.0 parts of the fluoropolymer A1 prepared in Example 1 was dissolved in 100 parts of ASAHIKLIN AC-6000 (HFC) which is a medium to prepare an oil repellent waterproof composition. Then, an expanded porous PTFE sheet (pore size: 1 µm, thickness: 300 µm, porosity: 60% (nominal values)) which is a substrate was treated with the oil repellent waterproof composition by dip coating (lifting rate: 5 mm/s), and the substrate was dried at 150°C for 10 minutes to remove the medium to prepare a sample 1. The obtained sample 1 was subjected to the wettability test.

### [Example 9]

A sample 2 was prepared in the same manner as in Example 8 except that 1.98 parts of the fluoropolymer A1 prepared in Example 1 and 0.02 part of the fluoropolymer C1 prepared in Example 7 were dissolved in 100 parts of ASAHIKLIN AC-6000 which is a medium to prepare an oil repellent waterproof composition. The obtained sample 2 was subjected to the wettability test.

### [Example 10]

A sample 3 was prepared in the same manner as in Example 8, except that 2.0 parts of the fluoropolymer B1 prepared in Example 2 was dissolved in 100 parts of ASAHIKLIN AC-6000 which is a medium to prepare an oil repellent waterproof composition. The obtained sample 3 was subjected to the wettability test.

### [Example 11]

A sample 4 was prepared in the same manner as in Example 8 except that 1.98 parts of the fluoropolymer B1 prepared in Example 2 and 0.02 part of the fluoropolymer C1 prepared in Example 7 were dissolved in 100 parts of ASAHIKLIN AC-6000 which is a medium to prepare an oil repellent waterproof composition. The obtained sample 4 was subjected to the wettability test.

### [Example 12]

An untreated expanded porous PTFE sheet which is a substrate was prepared as a sample 5 as it is, and the sample 5 was subjected to the wettability test.

### [Wettability test]

A test liquid (n-hexane, n-decane, acetone, MEK or ethanol) was quietly dropped in a droplet state (one drop was about 10 to 50 µL) on a surface of a horizontally put sample, and the wettable state and the existence or non-existence of permeation was visually observed. In general, a wet porous sample changes from semitransparent to transparent. In the test, two samples prepared under the same condition were used, a test liquid was dropped at three parts of a surface of each sample, namely dropped at the total of 6 parts, and the wettability after 30 seconds from dropped was evaluated based on the following standard. "○" means that the wet and the permeation were not observed at all 6 parts. "Δ" means that the wet or the permeation was observed at at least 1 part, and the test liquid maintained the shape of droplet. "×" means that the wet or the permeation was observed at at least 1 part such that the test liquid could not maintain the shape of droplet.

Results of the wettability test in Examples 8 to 12 are shown in Table 2.

**[Table 2]**

| | Fluoropolymer | Wettability after 30 seconds | | | | |
|---|---|---|---|---|---|---|
| | | n-hexane | n-decane | Acetone | MEK | Ethanol |
| Ex. 8 | A1 | ○ | ○ | ○ | ○ | ○ |
| Ex. 9 | A1+G1 | ○ | ○ | ○ | ○ | ○ |
| Ex. 10 | B1 | ○ | ○ | × | × | ○ |
| Ex. 11 | B1+C1 | ○ | ○ | × | × | ○ |
| Ex. 12 | Not treated | × | × | × | × | × |

It is evident from Table 2 that the liquid repellency to acetone and MEK of the samples prepared in Examples 10 and 11 which were not coated with the fluoropolymer (A) was poor, while the liquid repellency to all of n-hexane, n-decane, ethanol, acetone and MEK of the samples prepared in Examples 8 and 9 which were coated with the fluoropolymer (A) was excellent.

### [Example 13]

A sample 6 was prepared in the same manner as in Example 8, except that an oil repellent waterproof composition was prepared by adding 20 parts of the 10 mass% solution of the fluoropolymer A2 prepared in Example 3 in 80 parts of ASAHIKLIN AC-6000 for dilution. The obtained sample 6 was subjected to the wettability test.

### [Example 14]

A sample 7 was prepared in the same manner as in Example 8, except that an oil repellent waterproof composition was prepared by adding 20 parts of the 10 mass% solution of the fluoropolymer A3 prepared in Example 4 in 80 parts of ASAHIKLIN AC-6000 for dilution. The obtained sample 6 was subjected to the wettability test.

### [Example 15]

A sample 8 was prepared in the same manner as in Example 8, except that an oil repellent waterproof composition was prepared by adding 20 parts of the 10 mass% solution of the fluoropolymer A4 prepared in Example 5 in 80 parts of ASAHIKLIN AC-6000 for dilution. The obtained sample 6 was subjected to the wettability test.

### [Example 16]

A sample 9 was prepared in the same manner as in Example 8, except that an oil repellent waterproof composition was prepared by adding 20 parts of the 10 mass% solution of the fluoropolymer B2 prepared in Example 6 in 80 parts of ASAHIKLIN AC-6000 for dilution. The obtained sample 9 was subjected to the wettability test.

Results of the wettability test in Examples 10 and 13 to 16 are shown in Table 3.

**[Table 3]**

| | Fluoropolymer | | | Wettability after 30 seconds | | | | |
|---|---|---|---|---|---|---|---|---|
| | Type | Monomer [mass%] | | n-hexane | n-decane | Acetone | MEK | Ethanol |
| | | (a) | (b) | | | | | |
| Ex. 13 | A2 | 100 | 0 | ○ | ○ | ○ | ○ | ○ |
| Ex. 14 | A3 | 90 | 10 | ○ | ○ | ○ | ○ | ○ |
| Ex. 15 | A4 | 60 | 40 | ○ | ○ | ○ | ○ | ○ |
| Ex. 16 | B2 | 30 | 70 | ○ | ○ | ○ | × | ○ |
| Ex. 10 | B1 | 0 | 100 | ○ | ○ | × | × | ○ |

It is evident from Table 3 that in Example 16 in which only a fluoropolymer (b) wherein the proportion of units based on the monomer (a) is less than 40 mass% was used, the liquid repellency to MEK was poor, while in Examples 13 to 15 in which the fluoropolymer (A) wherein the proportion of units based on the monomer (a) is at least 40 mass% was used, the liquid repellency to all of n-hexane, n-decane, ethanol, acetone and MEK was excellent.

### [Example 17]

10 g of the 10 mass% solution of the fluoropolymer A2 prepared in Example 3 was added in a 500 mL flask made of glass in which 200 g of methanol was added, while stirring, and then a supernatant liquid was removed by decantation to obtain solid containing the fluoropolymer A2. Then, by drying the solid, 0.9 g of the fluoropolymer A2 (the number average molecular weight: 17,000) having perfluoroalkyl groups was obtained.
2.0 parts of the obtained fluoropolymer A2 was dissolved in 100 parts of HFE-7300 (manufactured by Sumitomo 3M, C₆F₁₃OCH₃, fluorine weight percentage: 70.6 mass%) to prepare an oil repellent waterproof composition. By using the obtained oil repellent waterproof composition, a sample 10 was obtained in the same manner as in Example 8. The obtained sample 10 was subjected to the wettability test.

### [Example 18]

An oil repellent waterproof composition was prepared in the same manner as in Example 17 except that instead of the 10 mass% solution of the fluoropolymer A2 prepared in Example 3, the 10 mass% solution of the fluoropolymer A3 prepared in Example 4 was used. Then, a sample 11 was prepared in the same manner as in Example 8 by using the obtained oil repellent waterproof composition. The obtained sample 11 was subjected to the wettability test.

Results of the wettability test in Examples 17 and 18 are shown in Table 4.

**[Table 4]**

| | Fluoropolymer | Wettability after 30 seconds | | | | |
|---|---|---|---|---|---|---|
| | | n-hexane | n-decane | Acetone | MEK | Ethanol |
| Ex. 17 | A2 | ○ | ○ | ○ | ○ | ○ |
| Ex. 18 | A3 | ○ | ○ | ○ | ○ | ○ |

It is evident from Table 4 that even though HFE was used as a medium instead of HFC, the liquid repellency to all of n-hexane, n-decane, ethanol, acetone and MEK was excellent.

### <Reference Example>

### [Example 19]

80 parts of ASAHIKLIN AC-6000 was added to 20 parts of the 10 mass% solution of the fluoropolymer A1 prepared in Example 1 for dilution to prepare an oil repellent waterproof composition. Then, a glass substrate was treated with the oil repellent waterproof composition by dip coating (lifting rate: 5 mm/s), and the glass substrate was dried at 150°C for 1 hour to obtain a sample 12. The obtained sample 12 was subjected to the contact angle measurement (after 1 second and after 21 seconds).

### [Example 20]

A sample 13 was obtained in the same manner as in Example 19, except that instead of the 10 mass% solution of the fluoropolymer A1 prepared in Example 1, the 10 mass% solution of the fluoropolymer B1 prepared in Example 2 was used. The obtained sample 13 was subjected to the contact angle measurement.

### [Contact angle]

A contact angle of a liquid for test (ethyl acetate, butyl acetate, MEK, water and n-decane) was measured by the following apparatus under the following condition.
Method: droplet method
Used apparatus: auto contact angle meter DM-500 (Kyowa Interface Science Co., Ltd.)
Droplet amount: 1.8-2.2 µL
Analysis method: θ/2 method
Results of the contact angle measurement in Examples 19 and 20 are shown in Table 5.

**[Table 5]**

| | | | | | | | | | Unit: degree | |
|---|---|---|---|---|---|---|---|---|---|---|
| | Ethyl acetate | | Butyl acetate | | MEK | | Water | | n-decane | |
| | After 1 sec | After 21 sec | After 1 sec | After 21 sec | After 1 sec | After 21 sec | After 1 sec | After 21 sec | After 1 sec | After 21 sec |
| Ex. 19 | 69.7 | 52.0 | 64.4 | 62.5 | 61.5 | 49.1 | 119.0 | 118.8 | 65.9 | 65.8 |
| Ex. 20 | 45.4 | 6.5 | 59.9 | 33.9 | 53.4 | 24.6 | 117.7 | 117.5 | 65.5 | 65.3 |

It is evident from Table 5 that in Example 20 in which the fluoropolymer (A) was not used, the contact angle after 21 seconds of the droplet was small, and the liquid repellency was poor, while in Example 19 in which the fluoropolymer (A) was used, the liquid repellency to all of ethylacetate and butyl acetate which are an ester solvent and MEK which is a ketone solvent was excellent.

### INDUSTRIAL APPLICABILITY

The oil repellent waterproof air-permeable filter of the present invention is useful as a filter used for an exhaust gas sensor for automobiles, an ink cartridge for an inkjet printer, etc.

The entire disclosure of Japanese Patent Application No. 2010-286566 filed on December 22, 2010 including specification, claims, drawings and summary is incorporated herein by reference in its entirety.

## Claims

1. An oil repellent waterproof air-permeable filter comprising a substrate having a continuous porous structure and a coating material covering the substrate and containing a fluoropolymer having a perfluoroalkyl group, wherein the fluoropolymer has constituent units based on the following monomer (a), and the proportion of said constituent units is from 40 to 100 mass% in the total constituent units:
monomer (a): an acrylate having a chlorine atom at an α position and a C₁₋₆ perfluoroalkyl group.

2. The oil repellent waterproof air-permeable filter according to Claim 1, wherein the monomer (a) is an acrylate having a chlorine atom at an α position and a C₆ perfluoroalkyl group.

3. The oil repellent waterproof air-permeable filter according to Claim 1 or 2, wherein the substrate is made of a polytetrafluoroethylene.

4. A process for producing an oil repellent waterproof air-permeable filter, comprising treating a substrate having a continuous porous structure with an oil repellent waterproof composition comprising a medium and a coating material containing a fluoropolymer having a perfluoroalkyl group, and removing the medium, wherein the fluoropolymer has constituent units based on the following monomer (a), and the proportion of the constituent units is from 40 to 100 mass% in the total constituent units:
monomer (a): an acrylate having a chlorine atom at an α position and a C₁₋₆ perfluoroalkyl group.

5. The process for producing an oil repellent waterproof air-permeable filter according to Claim 4, wherein the substrate is made of a polytetrafluoroethylene.

6. The process for producing an oil repellent waterproof air-permeable filter according to Claim 4 or 5, wherein the medium is at least one member selected from the group consisting of a hydrofluorocarbon and a hydrofluoroether.
